# EUROPEAN PATENT APPLICATION

(11) **EP 1 087 547 A2**
(43) Date of publication of application: **28.03.2001**
(21) Application number: 00307850.8
(22) Date of filing: 11.09.2000
(51) Int. Cl.: H04B 10/148

(54) **Terminal design for a WDM system with in-line semiconductor optical amplifiers**

(30) Priority: 24.09.1999 US 405679
(71) Applicant: LUCENT TECHNOLOGIES INC., Murray Hill, New Jersey 07974-0636 (US)
(72) Inventor: Banerjee, Sonali, Eatontown, New Jersey 07724 (US); Sun, Yan, Middletown, New Jersey 07748 (US); Eichenbaum, Bernard Raymond, Basking Ridge, New Jersey 07920 (US); Srivastava, Atul Kumar, County of Monmouth, New Jersey 07724 (US)
(74) Representative: Williams, David John

(57) **Abstract**

Semi-conductor amplifiers may be used in an optical transmission system without infecting transmitted data with cross-talk from adjacent channels by modulating the data and an alternative expression thereof onto respective optical carriers having the same wavelength, but polarized differently, and then combining the modulated signals. The modulated result is a signal having a relatively constant amplitude, but nevertheless carrying the underlying data, which may be recovered at a receiving end by regenerating the polarized signals and demodulating one or both of those signals.

## Description

### Field Of The Invention:

The invention relates to optical communications systems and more particularly relates to the transmission of data over an optical transmission path.

### Background Of The Invention:

Unlike an erbium doped fiber amplifier, the gain of a semiconductor optical amplifier (SOA) responds very quickly to instantaneous changes in the input power level due to transitions in the bit pattern of an incoming optical signal. Such changes are reflected in corresponding changes in the power level of the output signal. This problem is known as SOA gain saturation, and may cause cross-talk to occur between channels in a multichannel communication system.

More specifically, as a result of the fast response of a SOA, the output power in each of the optical signal channels does not remain constant. What this means is that a SOA distributes its input power among the incoming channels based on the bit patterns respectively carried in the channels. Thus, at any instant the input power of a SOA is divided among those channels concurrently bearing the same type of signal, e.g., a logical one. For example, for a four-channel system, the level of power in each channel can vary between Pₜₒₜₐₗ and Pₜₒₜₐₗ/4, based on how many of the four channels are transporting a logical one signal. To say it another way, the power is shared among the channels transporting a logical one.
Disadvantageously, if one incoming channel is carry a logical one and an adjacent incoming channel is carrying a logical zero, then it is likely that, due to the SOA cross-gain saturation problem, the level of the signal outputted in the adjacent channel will increase to the point where it appears to be a logical one.

**Summary Of The Invention:**

We address the above SOA power distribution problem by transmitting a bit pattern in each active channel as a somewhat constant level signal so that the response of each downstream SOA is also somewhat constant, thereby preventing the aforementioned cross-talk problem from occurring. We then recover each of the transmitted bit patterns at an intended receiver, all in accordance with the principles of the invention.

Specifically, an optical carrier signal is split into two carrier signals, and the resulting carrier signals are then respectively modulated by the incoming bit stream and the complement of the incoming bit stream. The modulated signals are then polarized in two orthogonal directions and then combined. The combined signal is then multiplexed with other such signals onto transmission media, e.g., optical fiber, for transmission to a far-end receiver, all in accordance with various aspects of the invention.

The far-end receiver then demultiplexes the received signal to recover the various component channel signals and each demultiplexed channel signal is then processed to separate the polarized signals from each other. One of the separated signals is then detected as the received signal, all in accordance with the principles of the invention.

These and other aspects of the invention will be appreciated from the following detailed description when considered in conjunction with accompanying drawings.

### Detailed Description:

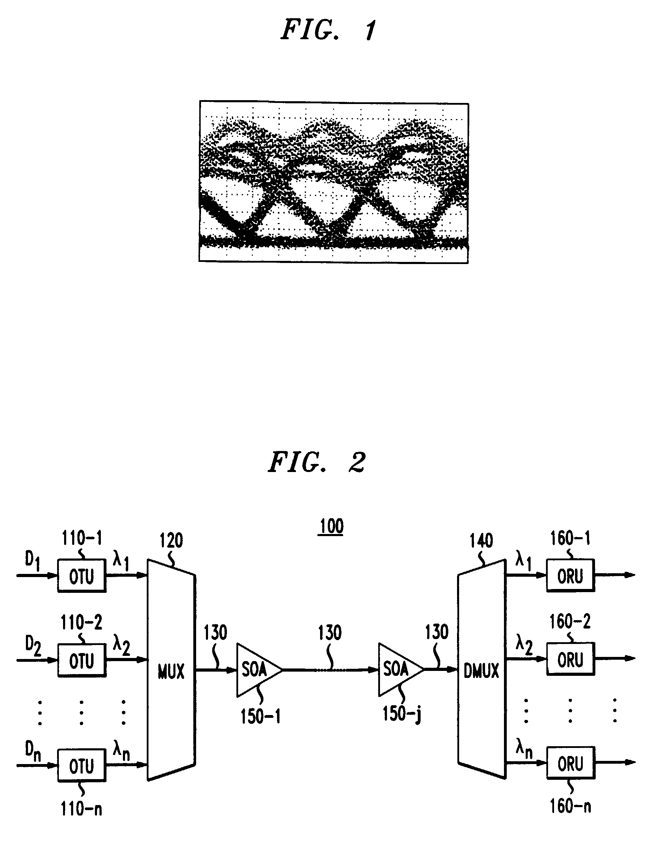

An illustrative optical transmission system 100 embodying the principles of the invention is shown in simplified form in FIG. 2. The illustrated optical system includes a plurality of optical transmitter units (OTU) 110-1 through 110-n, wavelength multiplexer (MUX) 120, a plurality of semiconductor optical amplifiers 150-1 through 150-j disposed along optical transmission path 130, wavelength demultiplexer (DMUX) 140 and optical receiver units 160-1 through 160-n. Each of the transmitter units generates a complement of the incoming data Dᵢ, and also generates an optical carrier signal of a respective wavelength and then splits the carrier signal into two carrier signals. The transmitter unit then respectively modulates the split carrier signals with the incoming data and the complement of the incoming data. The modulated signals are then polarized in mutually orthogonal directions. The polarized signals are then combined to form a signal having a relatively constant power level.

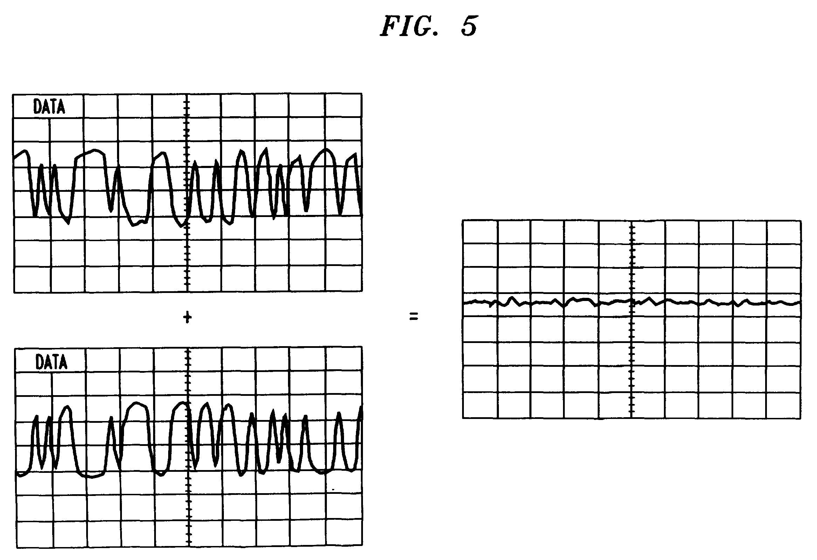

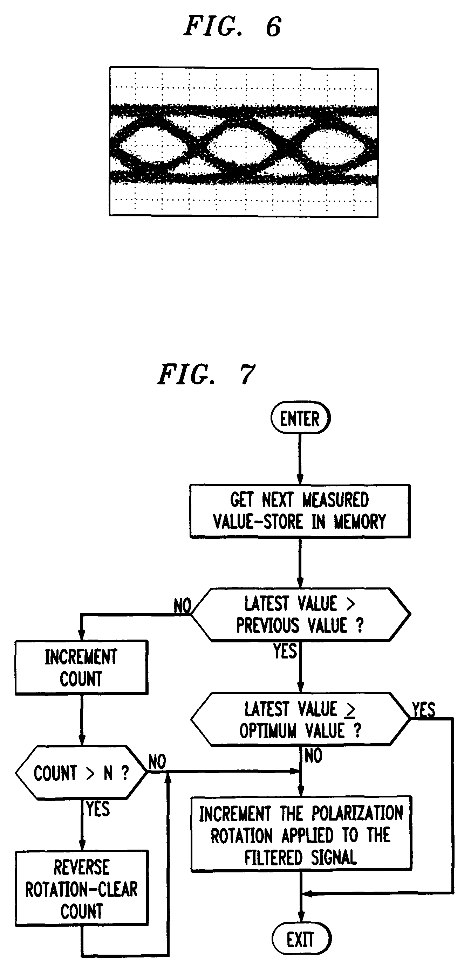

An OTU 110-i, more specifically, (a) generates a light signal of a respective wavelength, λᵢ, (b) splits the light signal into two such signals, (c) respectively modulates the two signal with the input data stream Dᵢ and its complement, (d) polarizes the modulated signals in respective mutually orthogonal directions, and (e) combines the polarized results and then (f) outputs the combined result as λᵢ. The polarized signals when combined produce a signal having a power level that is vector average of the power levels of the two polarized signals, i.e., a signal having a relatively constant level, as is illustrated in FIG. 5. The modulated result is then supplied to multiplexer 120. Multiplexer 120 multiplexes the optical signals that it receives from each OTU 110-1 through 110-n to an output extending via an optical transmission path to SOA 150-1. Since the level of the multiplexed signal is relatively constant, then the gain of SOA 150-1 does not vary and is distributed across the almost constant level incoming signal, all in accordance with the principles of the invention. (As such, the aforementioned cross-talk problem is virtually eliminated as shown in FIG. 6 when compared with FIG. 1.) The succeeding SOAs, including SOA 150-j (FIG. 1) respond similarly to the multiplexed signal. The last SOA 150-j amplifies the multiplexed signal and supplies the amplified result to demultiplexer (DMUX) 140 via a last segment of optical transmission path 130.

Demultiplexer 140, in turn, demultiplexes the multiplexed signal that it receives at its input into the component signals of respective wavelengths/channels λ₁ through λₙ and supplies the demultiplexed signals to Optical receiver Units (ORU) 160-1 through 160-n, respectively. Each ORU 160-i splits the optical signal that it receives into the two polarized signals, demodulates the polarized signals to recover the original data, Dᵢ. The ORU 160-i then outputs the recovered data Dᵢ to an intended receiver, all in accordance with various aspects of the invention.

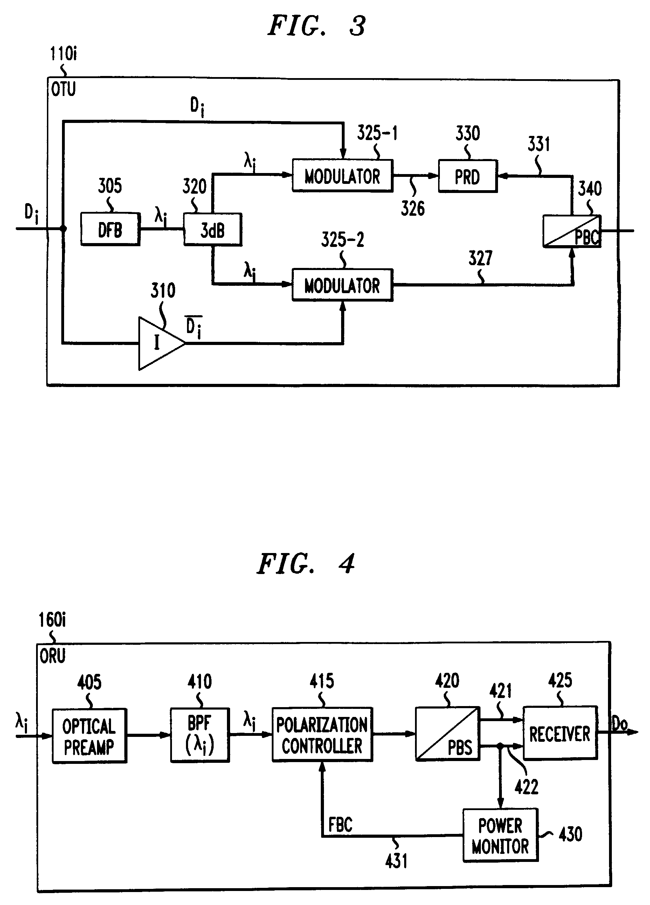

A block diagram of an OTU 110-i implementing the principles of the invention at the transmitting end of transmission system 100 is shown in FIG. 3. OTU 160-i includes a conventional laser 305, e.g., a so-called distributed feedback laser, which generates an optical signal λᵢ having a predetermined wavelength i. The optical signal is supplied to 3dB power splitter 320, which splits the signal into two optical signals each having approximately the same level of power, and supplies the split optical signals to conventional electro-optical modulators 325-1 and 325-2, respectively. As seen from the FIG., the incoming data, Dᵢ, is supplied directly to modulator 325-1 and to conventional inverter 310. Inverter 310 generates an alternative expression the incoming data, e.g., a complement of the data, and supplies the resulting data to conventional electro-optical modulator 325-2. In one illustrative embodiment of the invention, each of the electro-optical modulators 325-1 and 325-2 may be, for example, the electro-optical modulator available from Lucent Technologies Inc. as model No. X2426C. Modulators 325-1 and 325-2 modulate the data that they receive onto their respective copies of the optical carrier signal λᵢ, and then output the modulated result to paths 326 and 327, respectively. The polarization rotation device (PRD) 330 connected to path 326 rotates the polarization of the plane-polarized-optical signal that it receives via path 326 until such polarization is orthogonal to the polarization of the optical signal outputted to path 327, and outputs the result to path 331. In one illustrative embodiment of the invention, PRD 330 may be, for example, a suitable length of optical fiber that changes such polarization by the required amount.

Conventional polarization beam combiner (PRC) 340 combines the two orthogonally polarized light signals that it receives via paths 331 and 340, respectively, and outputs the combined result to an output terminal. In FIG. 1, the output terminal of PBC 340 is connected to a respective one of the inputs of multiplexer 120 based on the wavelength of λᵢ.

A block diagram of an ORU 160-i implementing the principles of the invention at the receiving end of transmission system 100 is shown in FIG. 4. An ORU 160-i, more specifically, includes conventional optical preamplifier 405 that amplifies a respective one of the demultiplexed channels, e.g., channel λᵢ, and presents the amplified signal to bandpass filter 410. Bandpass filter 410, which is tuned to the wavelength of amplified signal, removes extraneous signals from the amplified output of preamplifier 405, and thus supplies a filtered version of the optical carrier signal to polarization controller 415. Polarization controller 415 rotates the polarization of the filtered signal as a function of a rotation setting that is currently stored in its internal memory (not shown). The rotated signal is then supplied to conventional polarization beam splitter (PBS) 420, which may be, for example, the beam splitter available from JDS FITEL INC as model No. PB100-1U-NC. PBS 420 splits the polarized signal that it receives into two polarized signals. In a first illustrative embodiment of the invention, only one of the polarized signals is supplied to conventional receiver 425. Receiver 425, in turn, demodulates the polarized signal to recover the original data (or the complement thereof). It then converts the recovered data to electrical signals and supplies the latter signals to an intended recipient via path Do. If the data happens to be the complement of the original data, then receiver 425 complements that data in a conventional way and outputs the result to path Do.

In a second illustrative embodiment of the invention, PBS 420 supplies both of the orthogonally polarized signals to receiver 425 via paths 421 and 422, respectively, as is shown in the FIG. to implement a so-called push-pull mode of operation. Specifically, in a push-pull mode a receiver measures the difference between a logic signal and its complement to determine if the signal represents a particular logic level. This differential mode improves the sensitivity of receiver 425 to accurately detect signals having relatively small signal levels.

Power monitor 430 in a conventional manner measures the level of energy in either one of the signals that PBS 420 outputs and supplies the measured value as a feedback control signal (FBC) to polarization controller 415. If the measured value is greater than the last previous measured value received from power monitor 430, then polarization controller 415 increases the rotation of the polarization of the signal that it receives from BPF 410 by an incremental amount and in the direction of the last such rotation until the measured value approaches a so-called optimum threshold value stored in internal memory. If the measured values of a series of measured values are progressively less, then controller 415 reverses the direction of polarization that it applies to the filtered signal that it receives from PBS 415. In an illustrative embodiment of the invention, controller 415 may be a conventional microprocessor programmed in a conventional way to control a polarization rotation device, such as the polarization rotation device available from Fiber Control Industries.

A flow chart of a program that implements the rotation control in controller 415 is illustrated in FIG. 7.

It will thus be appreciated that, although the invention illustrated herein is described in the context of a specific illustrative embodiment, those skilled in the art will be able to devise numerous alternative arrangements which, although not explicitly shown or described herein, nevertheless, embody the principles of the invention and are within its spirit and scope. For example, in an alternative embodiment of the invention, two carrier signals of different wavelengths respectively modulated with data and the complement of the data (alternative expression of the data) may be used instead of two mutually orthogonal polarized signals of the same wavelength that are respectively modulated with the data and the complement of the data. The two carrier signals would be generated by respective lasers as represented by laser 310 of FIG. 3. As a further example, a single modulator may be used in place of the two modulators discussed above. A Mach-Zehnder waveguide is one example of such a modulator, in which the two carrier signals would respectively traverse the two activated legs of the Mach-Zehnder device.

## Claims

1. An optical signal transmission system comprising
transmitter means for respectively modulating a pair of carrier signals with data and a complement of the data and then polarizing the modulated carrier signals so that they are mutually orthogonal to one another, for combining the resulting combining the polarized signals, and for outputting the combined signal to an optical transmission path, and
receiver means operative for receiving the combined signal from the optical transmission path, for deriving the respective orthogonally polarized optical signals from the combined signal and for demodulating at least one of the polarized optical signals to recover said data and outputting the recovered data to an output terminal.

2. An optical transmission system comprising
a plurality of optical transmitter units, and
multiplexing apparatus for multiplexing optical signals received at respective inputs, in turn, onto an optical transmission path, and wherein each of the optical transmitter units comprises
generator means for generating an optical carrier signal of a respective wavelength and splitting the optical carrier signal into two optical carrier signals,
first apparatus for respectively modulating the two optical with data received at an input and an alternative representation of the data, for changing the polarization of at least one of the modulated signals to a predetermined polarization state, then combining the modulated signals and supplying the modulated signals to a respective input of the multiplexing apparatus.

3. The optical transmission system of claim 2 further comprising
a plurality of optical receiver units, and
demultiplexing apparatus for receiving the multiplexed signals at a point along said optical transmission path and supplying the demultiplexed signals to respective ones of the optical receiver units, and wherein each of the optical receiver units comprises,
means for deriving the first and second modulated signals from the received one of the demultiplexed signals and supplying at least one of the first and second modulated signals to output apparatus, said output apparatus being operative for demodulating the said at least one of the first and second modulated signals to recover the modulated data and supplying the data to an output terminal.

4. The optical transmission system of claim 2 wherein said apparatus for changing the polarization of said at least one of the modulated signals includes a polarization rotation device.

5. The optical transmission system of claim 4 wherein the polarization rotation device is a length of optical fiber adjusted to create said predetermined polarization state.

6. The optical transmission system of claim 2 wherein said predetermined polarization state is orthogonal to the polarization of the other one of said modulated signals.

7. The optical transmission system of claim 2 wherein the apparatus that combines the modulated signals is a polarization beam combiner.

8. The optical transmission system of claim 2 wherein said generator means is a distributed feedback laser.

9. The optical transmission system of claim 2 further comprising at least one semiconductor amplifier disposed along the optical transmission path.

10. The optical transmission system of claim 3 wherein the means for deriving is a polarization beam splitter.

11. The optical transmission system of claim 3 wherein the means for deriving is a polarization beam splitter and wherein each of the optical receiver units further comprises
a power monitor for measuring the power level of a respective one of the demultiplexed signals, and
a polarization controller for incrementally rotating the polarization beam splitter in a direction determined as a function of the measured power level.

12. The optical transmission system of claim 3 wherein the means for deriving is a polarization beam splitter and wherein each of the optical receiver units further comprises a polarization controller for rotating the polarization beam splitter in a direction by an amount determined as a function of the current power level of a respective one of the demultiplexed signals.

13. The optical transmission system of claim 3 wherein said output apparatus operates in a push-pull mode.

14. An optical signal transmitter unit comprising
means for receiving a data signal at an input terminal and for supplying the data signal and an alternative representation thereof to first and second modulator units, respectively,
means for generating an optical carrier signal of a predetermined wavelength and supplying the optical carrier signal equally to said first and second modulator units, and wherein each of said first and second modulator units is operative for modulating the data signal that it receives onto the received optical carrier signal and supplying the modulated signal to an output terminal,
polarization means for receiving the modulated signal from one of the first and second modulator units and for changing the polarization of the received modulated signal to a predetermined polarization state, and
polarization combiner means for combining the polarized signal from said polarization means with the modulated signal from the other one of the first and second modulated signals and supplying the combined signal to an output terminal.

15. The optical transmitter unit of claim 14 wherein the means for generating is a distributed feedback laser.

16. The optical transmitter of claim 14 wherein each of said first and second modulator units is an electro-optical modulator, in which the received data is characterized by electrical signals.

17. The optical transmitter of claim 14 wherein the polarization means is a polarization rotation device.

18. The optical transmitter of claim 17 wherein the polarization rotation device is a predetermined length of optical fiber.

19. The optical transmitter of claim 14 wherein said alternative representation of said data is the complement of said data.

20. An optical receiver unit
means for receiving an optical signal and splitting the optical signal into a number of differently polarized optical signals each of the same respective wavelength and each modulated with data, and supplying at least one of the number of differently polarized signals to output apparatus,
said output apparatus being operative for demodulating the said at least one of the differently polarized modulated signals to recover the modulated data and supplying the data to an output terminal.

21. The optical receiver unit of claim 20 wherein the means for splitting is a polarization beam splitter and wherein the optical receiver unit further comprises
a power monitor for measuring the power level of a respective one of the differently polarized signals, and
a polarization controller for incrementally rotating the polarization beam splitter in a direction determined as a function of the measured power level.

22. The optical receiver unit of claim 20 wherein the means for splitting is a polarization beam splitter and wherein the optical receiver unit further comprises a polarization controller for rotating the polarization beam splitter in a direction by an amount determined as a function of the current power level of a particular one of the differently polarized signals.

23. The optical receiver unit of claim 20 wherein said output apparatus operates in a push-pull mode.

24. The optical receiver unit of claim 20 wherein said number is 2 and wherein the differently polarized modulated signals are orthogonally polarized.

25. An optical transmitter unit comprising
means for respectively modulating two optical carrier signals with data and a complement of the data,
means for adjusting the polarization of at least one of the modulated signals so that it is different from the polarization of the other one of the modulated signals, and
means for combining the polarized signals and outputting the combined signal to transmission media.

26. The optical transmitter unit of claim 25 wherein said means for modulating is a Mach-Zehnder modulating device.

27. An optical transmitter unit comprising
means for respectively modulating two optical carrier signals with data and a complement of the data, and
means for combining the modulated signals and outputting the combined signals to transmission media.

28. The optical transmitter of claim 27 wherein the two optical carrier signals are non-polarized optical carrier signals having different wavelengths.

29. An optical signal transmission system comprising
transmitter means for modulating data and a complement of the data onto respective orthogonally-polarized optical carrier signals, for combining the modulated signals and for outputting the combined signal to optical transmission media, and
receiver means for receiving the combined signal from the optical transmission media, for deriving the respective orthogonally-polarized optical earner signals from the combined signal and for demodulating at least one of the orthogonally-polarized optical carrier signals to recover said data and output the recovered data to an output terminal.

30. An optical signal transmission system comprising
transmitter means for modulating data and a complement of the data onto respective non-polarized optical carrier signals of different wavelengths, for combining the modulated signals and for outputting combined signal to optical transmission media, and
receiver means for receiving the combined signal from the optical transmission media, for deriving the respective non-polarized optical carrier signals of different wavelengths from the combined signal and for demodulating at least one of the non-polarized optical carrier signals to recover said data and output the recovered data to an output terminal.
